# EUROPEAN PATENT APPLICATION

(11) **EP 3 159 782 A1**
(43) Date of publication of application: **26.04.2017**
(21) Application number: 16194845.0
(22) Date of filing: 20.10.2016
(51) Int. Cl.: G06F 3/0481, G02B 27/01

(54) **A HEAD UP DISPLAY**

(30) Priority: 22.10.2015 GB 201518766
(71) Applicant: Ford Global Technologies, LLC, Dearborn, MI 48126 (US)
(72) Inventor: JARVIS, Alex, London, E3 2GY (GB); WARREN, Morten, Cobham, Surrey KT11 2EU (GB); HOGGARTH, Marcus, St Albans, Hertfordshire AL1 4EP (GB)
(74) Representative: Giles, Ashley Simon

(57) **Abstract**

A head up display for a vehicle is provided. The head up display comprises: a controller configured to receive a first signal from an entertainment system of the vehicle, the first signal comprising timing information relating to a transition or event of a media content; and an image generator configured to generate an image on the head up display, wherein the size and/or position of the image on the head up display is at least partially determined according to the timing information. A method of generating an image for a head up display of a vehicle is also provided.

## Description

### Technical Field

The present disclosure relates to a head up display for a motor vehicle and is particularly, although not exclusively, concerned with a head up display configured to provide advanced notice of the timing of a change of media content.

### Background

In conventional motor vehicles, the driver may monitor several displays concurrently to view operating information relating to different systems of the vehicle and the external environment. This information is often provided through display screens on a dash board or console of the vehicle.

Head up displays have been utilised in motor vehicles to provide a consolidated view of important information on vehicle system, which can be viewed by the driver whilst continuing to look through the windscreen, without looking down at the dashboard or console. The head up display may be constantly in the driver's field of view. Hence, it is often desirable to simplify the display and provide information in an intuitive way, which can be read at a glance or apprehended by the driver when in their periphery vision.

### Statements of Invention

According to an aspect of the present disclosure, there is provided a head up display for a vehicle comprising: a controller configured to receive a first signal from an entertainment system of the vehicle, the first signal comprising timing information relating to a transition or event of a media content; and an image generator configured to generate an image on the head up display, wherein the size and/or position of the image on the head up display is at least partially determined according to the timing information.

Media transitions or events may include, but are not limited to, track changes, program changes, changes in movements in classical music, slide transitions, news, traffic and weather interruptions, advertisement breaks and user defined events.

The image generator may be configured to adjust the size and/or position of the image according to changes in the timing information. For example, the image generator may be configured to increase the size of the image when approaching the transition or event. Additionally or alternatively, the image generator may be configured to adjust the position of the image such that the image approaches the edge of the head up display when approaching the transition of event.

The image generator may be configured such that the image is no longer shown on the display, once the transition or event occurs. For example, the size and/or position of the image may be adjusted such that the image moves off the display, e.g. a display area of the display, at the time of the transition or event. Alternatively, the size and/or position of the image may be adjusted such that a viewer is given the impression that they are passing through the image at the time of the transition or event and the image may no longer be shown once the transition or event has occurred.

The controller may be further configured to receive a second signal from a forward facing sensor, the second signal comprising positional information of one or more objects ahead of the vehicle. The image generated by the image generator may be superimposed on or adjacent to one of the one or more objects. For example, the size, position of the image may be at least partially determined according to the positional information.

The controller may be further configured to receive a third signal from a speed sensor of the vehicle. The size and/or position of the image may be at least partially determined according to the speed of the vehicle.

The object, which the image is superimposed on or adjacent to, may be determined at least partially according to the speed of the vehicle. The object, which the image is superimposed on or adjacent to, may be determined such that the vehicle will pass the object at substantially the same time that the transition or event occurs.

The image may be configured such that the orientation and/or perspective of the image on the head up display corresponds to the orientation of the object which the image is superimposed on or adjacent to, relative to the vehicle. The scale, orientation and/or shear of the image may be adjusted according to the orientation of the object such that the image appears to be projected onto the surface of the object.

The controller may be configured to receive a fourth signal from a navigation system of the vehicle. The controller may be further configured to determine a predicted speed of the vehicle. The size and/or position of the image may be determined at least partially according to the predicted speed of the vehicle. The size and/or position of the image may be determined at least partially according to the predicted average speed of the vehicle before the transition of the event.

According to another aspect of the present disclosure, there is provided a head up display for a vehicle comprising: a controller adapted to receive a first signal from an entertainment system of the vehicle comprising timing information relating to a transition or event of a media content, and a second signal from a forward facing sensor, the second signal providing the position of an object ahead of the vehicle; and an image generator which generates an image indicative of the change of track or program in the field of view of the occupant of the vehicle, the image being superimposed on the object, as viewed by the occupant, in advance of the start time of the track or program.

According to another aspect of the present disclosure, there is provided a method of generating an image for a head up display of a vehicle, the method comprising: receiving a first signal from an entertainment system of the vehicle, the first signal comprising timing information relating to a transition or event of a media content; determining a size and/or position of the image at least partially according to the timing information; and generating the image on the head up display.

The method may further comprise adjusting the size and/or position of the image according to changes in the timing information. For example, the method may further comprise increasing the size of the image as the transition or event approaches. Additionally or alternatively, the method may further comprise adjusting the position of the image to approach the edge of the head up display as the transition or event approaches.

The method may comprise receiving a second signal from a forward facing sensor of the vehicle, the second signal comprising positional information of one or more objects ahead of the vehicle. The method may further comprise associating the image with one of the objects such that the image may be superimposed on or adjacent to the object on the head up display.

The method may further comprise adjusting the image such that the orientation and/or perspective of the image on the head up display corresponds to the orientation of the object which the image is superimposed on or adjacent to, relative to the vehicle.

The method may comprise receiving a third signal from a speed sensor of the vehicle. The size and/or position of the image may be determined at least partially according to the speed of the vehicle.

The method may further comprise determining one of the one or more objects with which to associate the image. The object may be determined at least partially according to the speed of the vehicle. The object may be determined such that the vehicle will pass the object at substantially the same time that the transition or event occurs.

The method may further comprise detecting a change in speed of the vehicle and determining another of the one or more objects with which to associate the image according to the change in speed of the vehicle.

The method may further comprise detecting a change in timing information from the entertainment system and determining another of the one or more objects with which to associate the image according to the change in timing information.

The method may comprise receiving a fourth signal from a navigation system of the vehicle comprising vehicle route information. The method may further comprise determining a predicted speed of the vehicle according to the vehicle route information. Alternatively, the fourth signal from the navigation system may comprise predicted speed information. The size and/or position of the image may be adjusted according to the predicted speed of the vehicle.

The method may further comprise determining one of the one or more objects with which to associate the image. The object may be determined at least partially according to the predicted speed of the vehicle.

According to another aspect of the present disclosure, there is provided a head up display system comprising the head up display according a previously mentioned aspect of the disclosure and a forward facing sensor configured to detect objects ahead of the vehicle.

The head up display system may further comprise a vehicle speed sensor.

According to another aspect of the present disclosure, there is also provided a vehicle comprising the head up display or head up display system according to previously mentioned aspects of the disclosure.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present disclosure, and to show more clearly how it may be carried into effect, reference will now be made, by way of example, to the accompanying drawings, in which:
Figure 1 is a schematic view of a head up display system according to arrangements of the present disclosure;
Figure 2 shows a method of generating an image for a head up display system according to arrangements of the present disclosure;
Figure 3 shows the view through a windscreen of a vehicle comprising the head up display system according to arrangements of the present disclosure;
Figure 4 shows the view through a windscreen of a vehicle comprising the head up display system according to arrangements of the present disclosure;
Figure 5 shows the view through a windscreen of a vehicle comprising the head up display system according to an arrangement of the present disclosure;
Figure 6 shows the view through a windscreen of a vehicle comprising the head up display system according to another arrangement of the present disclosure; and
Figure 7 shows the view through a windscreen of a vehicle comprising the head up display system according to another arrangement of the present disclosure.

### Detailed Description

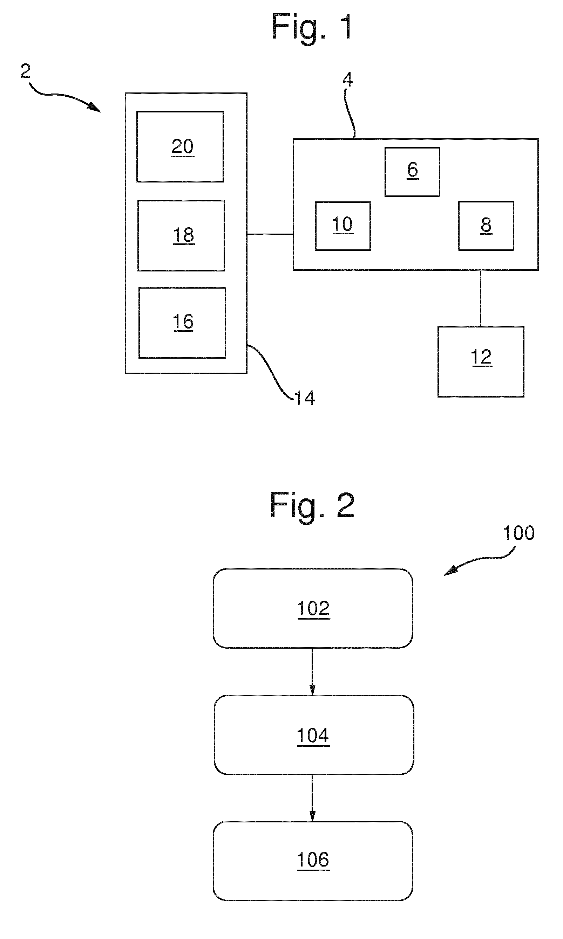

With reference to Figure 1, a head up display system 2 for a vehicle, such as a motor vehicle may comprise a head up display 4, a vehicle information system 12 and an entertainment system 14.

The vehicle information system 12 may comprise one or more controllers or modules of the vehicle configured to receive and monitor operating information, such as vehicle speed and engine speed, navigation information, and/or vehicle diagnostic information; and provide information to the driver via displays provided on a dashboard or console of the vehicle. The vehicle information system may also be configured to control the operation of systems of the vehicle, for example the vehicle information system 14 may comprise a Powertrain Control Unit (PCU). The controllers and/or modules of the vehicle information system 12 may be connected via a bus, such as a CAN data bus.

The entertainment system 14 may comprise any system capable of presenting media, e.g. audio or visual media, to an occupant of the vehicle. The entertainment system 14 may comprise, for example, a CD, DVD or Blu-ray player, or a computing device configured to play media stored within a memory or streamed over a network connection, such as an internet, peer-to-peer (P2P) or vehicle-to-vehicle (V2V) connection.

The head up display 4 may comprise a plurality of modules configured to generate and display content based on inputs provided to the head up display 4. As depicted in Figure 1, the head up display comprises a projector 6, configured to project an image to be viewed by an occupant of the vehicle, an image generator 8, configured to generate images to be projected, and a controller 10, configured to receive inputs to the head up display 4 and control the operation of the image generator 8 and projector 6. Although in Figure 1 the image generator 8 is provided separately to the controller 10, it is equally envisaged that the image generator 8 may be a module of the controller 10 and/or the functions of the image generator may be performed by the controller 10.

The head up display 4, e.g. the controller 10, may receive information from the vehicle information system 12 relating to the operating conditions of the vehicle, and may be configured to provide information to an occupant of the vehicle via the projector 6. For example, the head up display 4 may be configured to display vehicle and/or engine speed information.

The head up display 4 may also receive information from the entertainment system 14 relating to the media being presented by the entertainments system 14. The head up display 4 may be configured to display information to the occupant of the vehicle relating to the media being presented. For example, the head up display may be configured to display information relating to transitions or events in the media. Such transitions or events may include, but are not limited to, track changes, program changes, changes in movements in classical music, slide transitions, news, traffic and weather interruptions, advertisement breaks and user defined events.

With reference to Figure 2, in order to provide media transition and event information to an occupant of the vehicle in an easy to understand and intuitive way, the controller 10 may perform a method 100 according to an arrangement of the present disclosure.

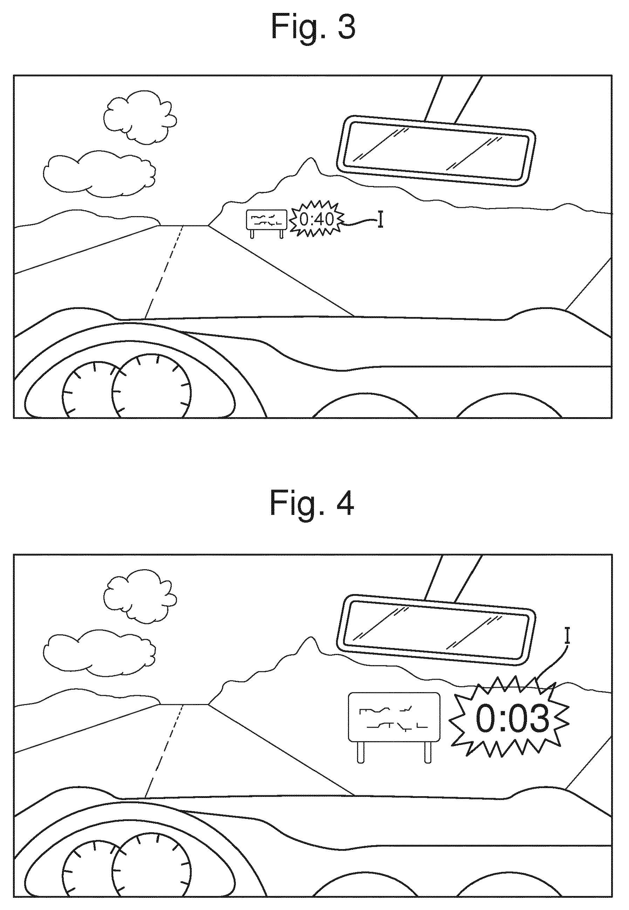

The method 100 begins at a first step 102, when the head up display 4 receives a signal from the entertainment system 14 comprising timing information relating to a transition or event of a media content. In a second step 104, the head up display 4 determines the size and/or position of an image I. depicted in Figures 3 to 7, to be displayed to the occupant to communicate information relating to the transition or event. The size and/or position of the image I is determined at least partially according to the timing information received. In a third step 106, the image to be displayed by the head up display is generated, e.g. by the image generator 8. The image generator 8 may output the image to the projector 6 for display to the vehicle occupant.

The display from the head up display 4 may be updated frequently to ensure the information provided to the user is up to date. The method 100 may be performed each time the display is updated. Hence, the size and/or position of the image may be adjusted, e.g. updated, according to the changes in the timing information.

The size and/or position of the displayed image I may be updated, such that the image appears to approach the occupant of the vehicle as the media transition or event approaches. For example, the image generator 8 may be configured to increase the size of the image I as the transition or event approaches, e.g. as the timing information indicates that there is a shorter period of time remaining until the transition or event occurs. The change in size and/or position of the image I may be configured by the image generator 8, to give the impression to the occupant that the vehicle passes through the image I at substantially the same time as the transition or event. Additionally or alternatively, the image generator 8 may be configured to change the size and/or position of the image I such that the image approaches the edge of a field of view of the occupant, e.g. the top, bottom or side of the occupant's field of view, as the transition or event approaches. The image I may leave the field of view of the occupant, or a display area provided by the head up display 4, at the substantially the same time as the transition or event. The image I may therefore give the impression that the vehicle is passing over, under, or to the side of the image at substantially the same time as the transition or event.

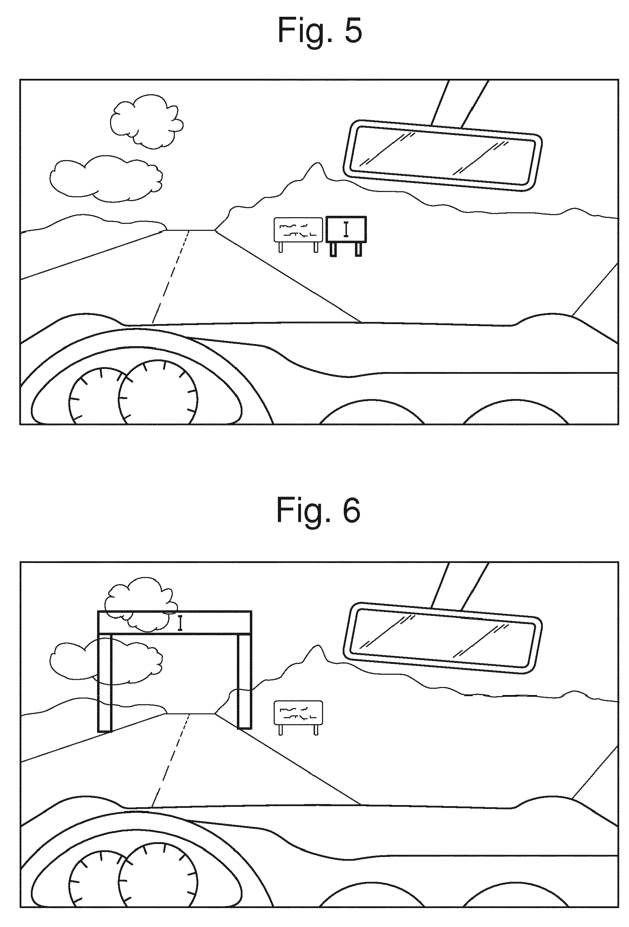

The image I may be circular, oval or any other shape. As shown in Figure 3, the shape of the image may be configured to be highly visible and attract the attention of the occupant. Alternatively, as shown in Figures 5 and 6, the image I may be configured to have the appearance of a road sign at the side of the road, or a gantry sign over the road. Alternatively again, the image I may be configured to appear as if it has been applied to the surface of the road ahead of the vehicle, e.g. as a road marking on the road, which the vehicle passes over at substantially the same time as the transition or event.

The size and/or position of the image may be configured to give the impression that the image is approaching the vehicle at a speed which is different from the speed on the vehicle. For example, the size and/or position of the image may be configured to give the impression that the image is approaching the vehicle at a constant speed, which may be independent from the speed of the vehicle.

The vehicle information system 12 may include a vehicle speed sensor 16 and the head up display 4 may receive a speed signal indicating the current speed of the vehicle. The size and/or position of the image generated by the image generator may be determined at least partially according to the speed of the vehicle. For example, if the vehicle is traveling at a high speed, the initial size of the image, when it first is generated by the image generator 8 may be smaller than if the vehicle is travelling slower. The second step 104 of the method may comprise calculating a distance expected to be travelled by the vehicle in the time remaining until the transition or event and calculating a suitable size and/or position of the image I according to the distance.

The rate of change of the size and/or position of the image as the transition or event approaches may be dependent on the speed of the vehicle. Additionally or alternatively, the size and/or position of the image at the time of the media transition or event may be the same regardless of the initial size and/or position of the image. Hence, when the vehicle is travelling faster, the head up display may give the impression that the image is approaching the driver at higher speed. With reference to Figures 3 and 4, the image generator 8 may be configured, such that the image I appears to be approaching the driver at substantially the same speed as the vehicle is traveling. This may give the impression that the vehicle is approaching the image I at the same speed as other objects outside the vehicle, such as road signs.As the timing information can be communicated to the occupant of the vehicle by the size and/or position of the image I displayed by the head up display 4 and/or by a change in size and/or position of the image, it may not be necessary for the timing information to be provided by using gauges or numerals. This may allow the driver of the vehicle to interpret the information at a glance, or when in their peripheral vision. In some arrangements however, the image I may comprise a gauge or numeric display indicating the time until the event or transition. This may allow the occupant to accurately determine when the event or transition will occur if desired. For example, as shown in Figures 3 and 4, the image I may comprise a timer, which indicates the time remaining until the event or transition.

The vehicle information system 12 may further comprise a vehicle navigation system 18, such as a satellite navigation system. The head up display 4 may receive a navigation signal from the vehicle information system 12 comprising information relating to the predicted speed and/or route of the vehicle. The size and/or position of the image I generated by the image generator 8 may be determined at least partially according to the predicted speed and/or route of the vehicle. The size and/or position of the image I may be determined according to the average predicted speed of the vehicle prior to the transition or event.

The vehicle information system 12 may further comprise a forward facing sensor 20. The forward facing sensor 20 may be configured to detect objects ahead of the vehicle, such as signs, bollards, fences or any other object. The forward facing sensor may be capable of detecting the distance to the objects, the size of the objects and/or the orientation of the objects.

The head up display 4 may receive a detected objects signal from the vehicle information system 12, which comprises information relating to one or more objects which have been detected by the forward facing sensor 20. The head up display 4 may associate the image I with one of the one or more objects. The size and/or position of the image may be determined such that the image I appears to be superimposed onto the object.

The head up display 4 may determine one of the one or more objects, detected by the forward facing sensor, with which to associate the image. The object may be selected according to the size of the object, the speed and/or predicted speed of the vehicle, and/or the distance to the object. For example, the head up display may select the object that the vehicle is expected to pass at substantially the same time that the transition or event occurs.

The method 100 may comprise an object selection step, in which an object detected by the forward facing sensor 20 is selected based on the distance that the vehicle is expected or predicted to travel before the transition or event, e.g. based on the current and/or predicted speed of the vehicle, and the distance to each of the detected objects. In the second step 104, the size and/or position of the image I may be determined at least partially according to the size of the selected object and/or distance to the selected object, e.g. in addition or as an alternative to the time remaining until the transition or event.

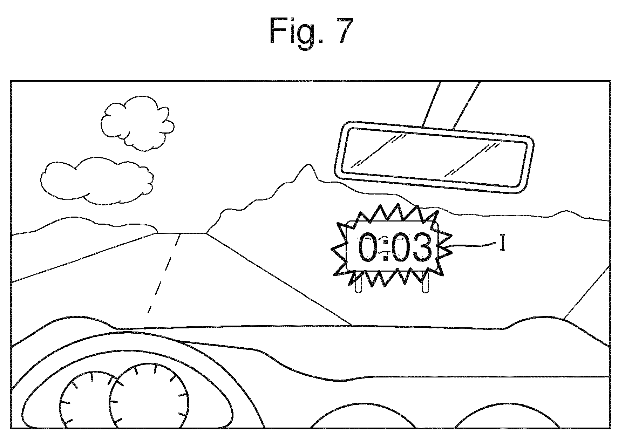

As shown in Figure 7, the image generator 8, may adjust the image I, e.g. the skew of the image, according to the orientation of the selected object, such that the image I appears to be projected onto the surface of the selected object. The skew of the image may be calculated together with the size and/or position of the image in the second step 102 of the method. Alternatively, the skew may be calculated in a separate step.

The size, position and/or skew of the image may be updated as the vehicle approaches the selected object, such that the image I remains associated with the object, e.g. continues to appear as if it is projected onto the object. Alternatively, the size, position and/or skew of the image I may be determined such that it appears to be adjacent to the object. For example, as shown in Figure 5, the image I may resemble a road sign, and the size and/or position and/or skew of the image may be determined such that the road sign image appears to be adjacent to, e.g. below, above or to the side of a sign ahead of the vehicle. This may prevent the image I obscuring any information provided on the sign.

If the speed and/or predicted speed of the vehicle changes before the transition or event occurs, or if the timing information changes unexpectedly, e.g. if the rate of change in time increases or decreases, it may be desirable to change the object with which the image I is associated, e.g. such that the vehicle will pass the image at substantially the same time as the transition or event occurs. Hence, the head up display 4 may be configured to detect a change in the speed of the vehicle, predicted speed of the vehicle and/or the timing information, and may determine another of the one or more objects with which to associate the image I.

Alternatively, it may be determined that no object is available, which the vehicle will pass at substantially the same time that the transition or event occurs, and hence the image I may not be associated, or may no longer be associated with an object. It may instead simply be projected such that it appears to the occupant of the vehicle at an arbitrary point ahead of the vehicle. It may for example appear as if it was applied to the surface of the road ahead of the vehicle.

In the illustrated embodiments the image is described as being projected into the view of an occupant of the vehicle, but the invention is equally applicable to any means of creating an image in the view of the occupant, such as a laser generated holographic image.

Additional statements of invention are set out below as numbered statements.
Statement 1. A head up display for a vehicle comprising:
   a controller configured to receive a first signal from an entertainment system of the vehicle, the first signal comprising timing information relating to a transition or event of a media content; and
   an image generator configured to generate an image on the head up display, wherein the size and/or position of the image on the head up display is at least partially determined according to the timing information.
Statement 2. The head up display according to statement 1, wherein the image generator is configured to adjust the size and/or position of the image according to changes in the timing information.
Statement 3. The head up display according to statements 1 or 2, wherein the image generator is configured to increase the size of the image when approaching the transition or event.
Statement 4. The head up display according to any of the preceding statements, wherein the image generator is configured to adjust the position of the image such that the image approaches the edge of the head up display when approaching the transition of event.
Statement 5. The head up display according to any of the preceding statements, wherein the controller is further configured to receive a second signal from a forward facing sensor, the second signal comprising positional information of one or more objects ahead of the vehicle;
   wherein the image generated by the image generator is superimposed on or adjacent to one of the one or more objects.
Statement 6. The head up display according to any of the preceding statements, wherein the controller is further configured to receive a third signal from a speed sensor of the vehicle, wherein the size and/or position of the image is at least partially determined according to the speed of the vehicle.
Statement 7. The head up display according to statements 5 and 6, wherein the object, which the image is superimposed on or adjacent to, is determined at least partially according to the speed of the vehicle.
Statement 8. The head up display according to any of statements 5 to 7, wherein the object, which the image is superimposed on or adjacent to, is determined such that the vehicle will pass the object at substantially the same time that the transition or event occurs.
Statement 9. The head up display according to any of statements 5 to 8, wherein the image is configured such that the orientation and/or perspective of the image on the head up display corresponds to the orientation of the object which the image is superimposed on or adjacent to, relative to the vehicle.
Statement 10. The head up display according to any of the preceding statements, wherein the controller is configured to receive a fourth signal from a navigation system of the vehicle;
   wherein the controller is further configured to determine a predicted speed of the vehicle; and
   wherein the size and/or position of the image is determined at least partially according to the predicted speed of the vehicle.
Statement 11. The head up display according to statement 10, wherein the size and/or position of the image is determined at least partially according to the predicted average speed of the vehicle before the transition of the event.
Statement 12. A method of generating an image for a head up display of a vehicle, the method comprising:
   receiving a first signal from an entertainment system of the vehicle, the first signal comprising timing information relating to a transition or event of a media content;
   determining a size and/or position of the image at least partially according to the timing information; and
   generating the image on the head up display.
Statement 13. The method according to statement 12, wherein the method further comprises:
   adjusting the size and/or position of the image according to changes in the timing information.
Statement 14. The method according to statements 12 or 13, wherein the method further comprises:
   increasing the size of the image as the transition or event approaches.
Statement 15. The method according to any statements 12 to 14, wherein the method further comprises:
   adjusting the position of the image to approach the edge of the head up display as the transition or event approaches.
Statement 16. The method according to any of statements 12 to 15, wherein the method further comprises:
   receiving a second signal from a forward facing sensor of the vehicle, the second signal comprising positional information of one or more objects ahead of the vehicle; and
   associating the image with one of the objects such that the image is superimposed on or adjacent to the object on the head up display.
Statement 17. The method according to statement 16, wherein the method further comprises:
   adjusting the image such that the orientation and/or perspective of the image on the head up display corresponds to the orientation of the object which the image is superimposed on or adjacent to, relative to the vehicle.
Statement 18. The method according to any of statements 12 to 17, wherein the method further comprises receiving a third signal from a speed sensor of the vehicle, wherein the size and/or position of the image is determined at least partially according to the speed of the vehicle.
Statement 19. The method according statement 18 when depending on statement 16 or 17, wherein the method further comprises:
   determining one of the one or more objects with which to associate the image;
   wherein the object is determined at least partially according to the speed of the vehicle.
Statement 20. The method according to statement 19, wherein the object is determined such that the vehicle will pass the object at substantially the same time that the transition or event occurs.
Statement 21. The method according to statement 19 or 20, wherein the method further comprises:
   detecting a change in speed of the vehicle; and
   determining another of the one or more objects with which to associate the image according to the change in speed of the vehicle.
Statement 22. The method according to any of statements 19 to 21, wherein the method further comprises:
   detecting a change in timing information from the entertainment system; and
   determining another of the one or more objects with which to associate the image according to the change in timing information.
Statement 23. The method according to any of statements 12 to 22, wherein the method further comprises:
   receiving a fourth signal from a navigation system of the vehicle comprising vehicle route information;
   determining a predicted speed of the vehicle according to the vehicle route information; and
   adjusting the size and/or position of the image according to the predicted speed of the vehicle.
Statement 24. The method according statement 23 when depending directly or indirectly on statement 16, wherein the method further comprises:
   determining one of the one or more objects with which to associate the image;
   wherein the object is determined at least partially according to the predicted speed of the vehicle.
Statement 25. A vehicle comprising the head up display according to any of statements 1 to 11.

It will be appreciated by those skilled in the art that although the invention has been described by way of example, with reference to one or more examples, it is not limited to the disclosed examples and alternative examples may be constructed without departing from the scope of the invention as defined by the appended claims.

## Claims

1. A head up display for a vehicle comprising:
a controller configured to receive a first signal from an entertainment system of the vehicle, the first signal comprising timing information relating to a transition or event of a media content; and
an image generator configured to generate an image on the head up display,
wherein the size and/or position of the image on the head up display is at least partially determined according to the timing information.

2. The head up display according to claim 1, wherein the image generator is configured to adjust the size and/or position of the image according to changes in the timing information.

3. The head up display according to claims 1 or 2, wherein the image generator is configured to increase the size of the image when approaching the transition or event.

4. The head up display according to any of the preceding claims, wherein the image generator is configured to adjust the position of the image such that the image approaches the edge of the head up display when approaching the transition of event.

5. The head up display according to any of the preceding claims, wherein the controller is further configured to receive a second signal from a forward facing sensor, the second signal comprising positional information of one or more objects ahead of the vehicle;
wherein the image generated by the image generator is superimposed on or adjacent to one of the one or more objects.

6. The head up display according to any of the preceding claims, wherein the controller is further configured to receive a third signal from a speed sensor of the vehicle, wherein the size and/or position of the image is at least partially determined according to the speed of the vehicle.

7. The head up display according to any of claims 5 to 6, wherein the object, which the image is superimposed on or adjacent to, is determined such that the vehicle will pass the object at substantially the same time that the transition or event occurs.

8. The head up display according to any of the preceding claims, wherein the controller is configured to receive a fourth signal from a navigation system of the vehicle;
wherein the controller is further configured to determine a predicted speed of the vehicle; and
wherein the size and/or position of the image is determined at least partially according to the predicted speed of the vehicle.

9. A method of generating an image for a head up display of a vehicle, the method comprising:
receiving a first signal from an entertainment system of the vehicle, the first signal comprising timing information relating to a transition or event of a media content;
determining a size and/or position of the image at least partially according to the timing information; and
generating the image on the head up display.

10. The method according to claim 9, wherein the method further comprises:
receiving a second signal from a forward facing sensor of the vehicle, the second signal comprising positional information of one or more objects ahead of the vehicle; and
associating the image with one of the objects such that the image is superimposed on or adjacent to the object on the head up display.

11. The method according to claim 10, wherein the method further comprises:
adjusting the image such that the orientation and/or perspective of the image on the head up display corresponds to the orientation of the object which the image is superimposed on or adjacent to, relative to the vehicle.

12. The method according claim 10 or 11, wherein the method further comprises:
determining one of the one or more objects with which to associate the image;
wherein the object is determined at least partially according to the speed and/or predicted speed of the vehicle.

13. The method according to claim 12, wherein the object is determined such that the vehicle will pass the object at substantially the same time that the transition or event occurs.

14. The method according to claim 12 or 13, wherein the method further comprises:
detecting a change in speed and/or predicted speed of the vehicle; and
determining another of the one or more objects with which to associate the image according to the change in speed of the vehicle.

15. The method according to any of claims 12 to 14, wherein the method further comprises:
detecting a change in timing information from the entertainment system; and
determining another of the one or more objects with which to associate the image according to the change in timing information.
